Europäisches Patentamt

European Patent Office

Office européen des brevets

(19)

(11) Publication number: **0 135 732**
A2

(12) # EUROPEAN PATENT APPLICATION

(21) Application number: **84109164.8**

(22) Date of filing: **02.08.84**

(51) Int. Cl.⁴: **H 02 K 16/00,** H 02 K 47/18, H 02 M 5/46

(30) Priority: **18.08.83 US 524148**

(43) Date of publication of application: **03.04.85 Bulletin 85/14**

(84) Designated Contracting States: **AT BE CH DE FR GB IT LI LU NL SE**

(71) Applicant: **Thornton, William K., 4130 South 6115 West, West Valley City Utah 84120 (US)**
Applicant: **Thornton, Peppur A., 4130 South 6115 West, West Valley City Utah 84120 (US)**

(72) Inventor: **Thornton, William K., 4130 South 6115 West, West Valley City Utah 84120 (US)**
Inventor: **Thornton, Peppur A., 4130 South 6115 West, West Valley City Utah 84120 (US)**

(74) Representative: **Bauer, Wulf, Dr., Wolfgang-Müller-Strasse 12, D-5000 Köln 51 (Marienburg) (DE)**

(54) **Rotary frequency amplifier.**

(57) A rotary frequency amplifier has a series of connected primary, and tertiary stators (4) and rotos (8, 16) which transform input power to higher amperages utilizing the multiplication effect of electromotive forces induced in windings (5, 9, 11, 17) of the amplifier through rotating alternating current magnetic fields.

Applicants: William K. THORNTON, Salt Lake City, Utah U.S.A.
and

Peppur A. THORNTON, Salt Lake City, Utah U.S.A.

- 1 -

## ROTARY FREQUENCY AMPLIFIER

This invention relates to the field of amplification of alternating current frequency through the use of rotational alternating current magnetic fields.

It has long been a goal of the experts in the field of electrical energy generation to develop a device capable of increasing the frequency of alternating current generators. This field is replete with developments directed toward this objective. However, none of these attempts have been successful without the establishment of a new primary power source.

It is therefore an objective of this invention to provide means for increasing alternating current frequency.

It is also an objective to increase alternating current frequency without the need of new primary power source.

It is further an objective to increase alternating current frequency through rotating alternating current magnetic fields.

It is an additional objective to provide a device capable of functioning, among other things, as a motor, a power generator or a power transformer.

Further objectives of the invention will become obvious through the disclosure of the invention as follows.

A frequency amplifier of the invention has means for delivering alternating current of a prescribed frequency to the electromagnetic windings of a primary fixed stator means. The flow of current through the primary stator means generates an alternating magnetic field which travels in a rotational path around the circular stator means. This magnetic field has an established frequency which is equal to that of the incoming alternating current. The magnetic field also has a rotational velocity equal to approximately 30 revolutions per minute per cycle of frequency.

This equation may be expressed as follows:

$$\text{Rotational Velocity} = \frac{\text{Input Frequency} \times 120}{\text{Number of Poles}}$$

At this point, the electromagnetic force begins to rotate a primary rotor means located within the primary stator means by energizing the windings of the primary rotor means and driving the rotor means at a velocity equal to or less than the established velocity of the electromagnetic wave. The electromotive force induced by the windings of the primary rotor means has two components:

1. the primary frequency inducted by the electromotive force from the primary stator means, and

2. the cutting of the magnetic lines of force at a frequency equal to its established rotational velocity and that of the magnetic phase.

The result is a doubling of the frequency inducted in the primary rotor means by a combination of primary and secondary frequencies, according to the following equation:

60 Cycles AC Frequency + 60 Cycles Magnetic Frequency=
120 Cycles of Inducted Frequency.

The electromotive force at the inducted frequency from the primary rotor means is then fed to the windings of a secondary stator means adapted to rotate with the primary rotor means. The secondary rotor means begins to rotate at a velocity equal to or less than that of the new higher induced frequency from the primary rotor means. As noted above, this results in a higher velocity due to the higher frequency. As in the first stage the rotating secondary stator means induces an electromotive force into the windings of a secondary rotor means, which then rotates at a new secondary level according to the same formula noted above, namely:

120 Cycles AC Frequency + 120 Cycles Magnetic Frequency=
240 Cycles of Inducted Frequency.

This electrical energy can then either be removed for use through appropriate means or can be cycled back into the amplifier or can be sent through still another stage to further increase the amplification, thereby permitting the amplifier to be employed as a motor, a generator or a transformer, without the necessity of providing a new primary power source.

A preferred embodiment of the invention is illustrated in the attached drawings, in which:

FIG. 1, is an exploded view of an amplifier of the invention in perspective;

FIG. 2, an alternative lubrication circulation system for the amplifier.

FIG. 3, a cooling fan system for the amplifier;

FIG. 4, a coolant coil system for the amplifier, and

FIG. 5, an optional circuit system to direct the energy resulting from the amplifier.

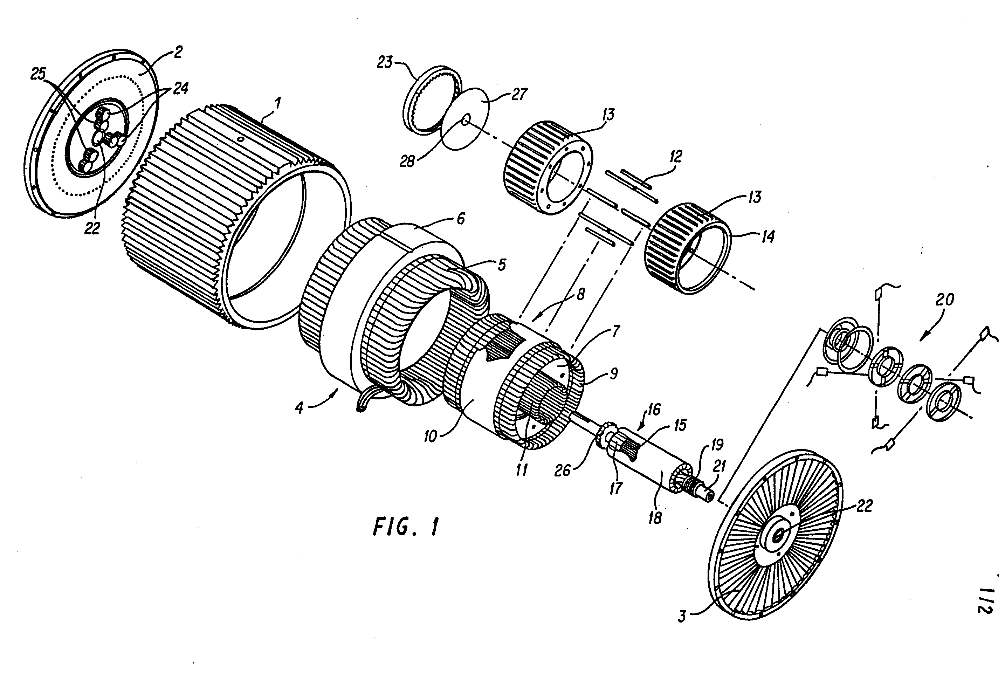

As shown in FIG. 1, a preferred embodiment of the amplifier has a cylindrical housing 1 having a fluted exterior surface for heat dissipation. A pair of circular end bell covering means 2, 3 are disposed at opposite ends of housing 1. A primary fixed cylindrical stator 4 is disposed within housing 1 and has primary stator windings 5 and circumferential laminations 6. Primary stator windings 5 are energized by the introduction of electrical energy from an outside energy source, not shown, such as a source of 60 cycles alternating current (AC). The introduction of this energy produces an electromagnetic field which is concentrated by laminations 6.

The concentrated electromagnetic field induces rotation in the laminations 7 of primary rotor 8 located concentrically within primary stator 4. An electrical current is thereby induced in the generator windings 9 of primary rotor 8. It has been found beneficial to provide a circumvential torque belt 10 to primary rotor 8 because of the rotational velocity of primary rotor 8. As shown in the following equation, the induced frequency of primary rotor 8 is double that of the original outside energy source received from primary stator 4:

60 Cycles AC Frequency + 60 Cycles Magnetic Frequency=

120 Cycles of Inducted Frequency.

This doubling of the frequency occurs because as the current follows a circular pattern in the windings 5 of primary stator 4, the resulting magnetic wave inducted by the flow of current also follows a circular pattern and drives laminations 7 of primary rotor 8 also in a circular direction. As the generator windings 9 of primary rotor 8 cut the magnetic lines of force a current of proportional frequency is produced. However, as generator windings 9 are passing through the lines of force of an alternating current magnetic field at their proportional frequency, the frequencies are added together to increase the rotational velocity of the next rotating member by increasing the frequency of its magnetic wave. This is expressed in the equation as follows:

$$\text{Rotational Velocity} = \frac{\text{Input Frequency x 120}}{\text{Number of Poles,}}$$

where output frequency is the sum of incoming primary frequency and the magnetic frequency.

The electromotive force (E.M.F.) produced in primary rotor windings 9 induces a current in the secondary stator windings 11, located concentrically within primary rotor 8. Primary rotor laminations 7 are held together in this embodiment through a plurality of retaining rods 12 which are also used to fasten primary rotor supports 13 to primary rotor laminations 9. Primary supports 13 also support rotor bearings 14 in order that the entire subassembly can rotate.

The current produced within secondary stator windings 11 produces rotational motion in the lamination 15 of secondary rotor 16. The velocity of rotation is directly proportional to the velocity of primary rotor 8 and its frequency. As in the relationship between primary stator 4 and primary rotor 8, secondary rotor laminations 15 cut the lines of force produced by secondary stator windings 11 and produce an E.M.F. within generator windings 17 of secondary rotor 16. A torque belt 18 is provided around the windings 11 as a restraining means for the windings at the high rotational velocity encontered. In accordance with the formula noted above, the frequency is again doubled in secondary rotor 16 to 240 cycles of inducted frequency.

In one embodiment, the current from secondary rotor 16 is then carried to a slip ring assembly 19 and can be recycled as input to primary stator 4 to minimize the total power consumed or for other purposes through a branch assembly 20. Secondary rotor 16 and slip ring assembly 19 are supported by a shaft 21 which in turn is rotationally supported by bearings 22 in bell covers 2, 3.

An optional gear system for velocity control is also illustrated in FIG. 1. Mechanical power in the form of torque that has been developed by primary rotor lamination 7 can be transferred directly to a gear 23 through direct mechanical fastening to primary rotor supports 13. This mechanical torque is then transmitted to a carrier gear assembly 24 and then through a directional correction gear assembly 25 to correct the rotation of a third gear 26 journaled on shaft 21 and to limit the rotational velocity attained by shaft 21.

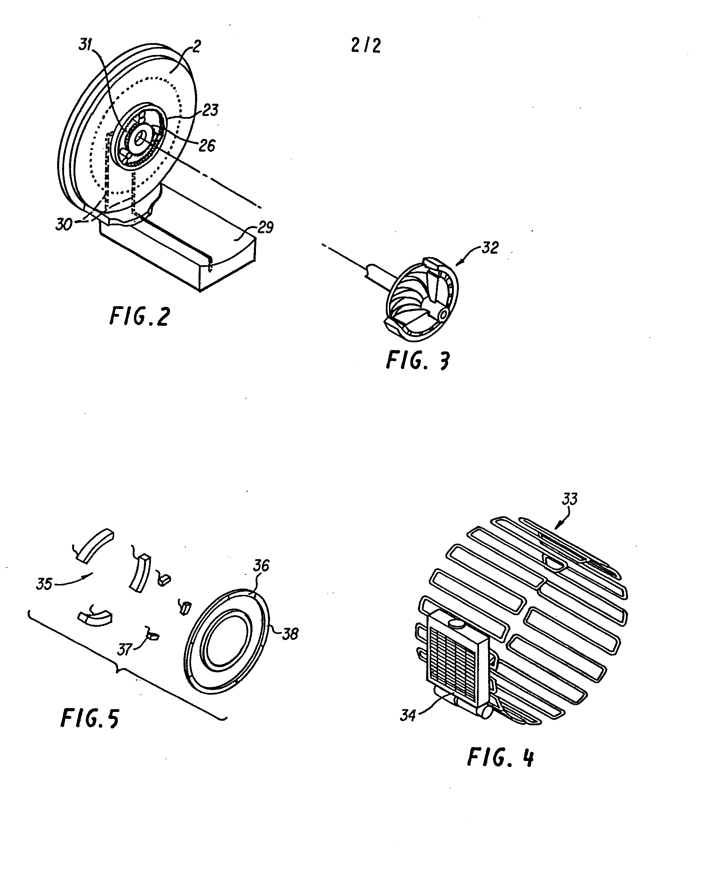

This optional gear system for speed control can be lubricated either by a standing lubrication bath shown in FIG. 1, or an optional circulating lubrication system illustrated in FIG. 2. In the standing lubrication system, a retaining plate 27 is connected to gear 23 and houses a lubricant shaft seal 28 for prevention of lubricant leakage at shaft 21.

As shown in FIG. 2, an optional circulation lubricant system has a lubricant tank 29 and feed lines 30 leading to a pump 31 mounted either within gear 23 and run mechanically from gear 23 or mounted externally for independent operation.

FIG. 3 illustrates an optional cooling fan 32 which can be mounted at either or both ends of the frequency amplifier.

As shown in FIG. 4, in order to reduce thermal losses due to heat produced by eddy currents in primary stator laminations 6, an optional system of cooling coils 33 can be attached to laminations 6. A coolant pump 34 can be attached to shaft 21 or externally for independent operation. Air ducts may also be added to rotor support 13 to increase air circulation around winding 9 to remove additional heat; and air exhaust ports in housing 1 and end bell covers 2, 3 can also be utilized to remove heated air.

FIG. 5 illustrates an optional pulse circuit connected to generator windings 9 of primary rotor 8 through a set of brushes 35. Brushes 35 allow current from generator windings 9 to enter pulse rings 36. In one position, pulse rings 36 cause a short of the three phases together to aid in developing a greater lead to drive primary laminations 7. In the other positions, pulse rings 36 send a pulse of current to secondary stator windings 11 through an additional set of brushes 37 and a ring 38.

The recycling of normally wasted magnetic field energy as electrical energy back to its original source reduces the total energy consumed. The cooling effect achieved by employing the herein-embodied magnetic gear concept of the rotary frequency amplifier to attain accelerated rotational speeds makes it possible to reduce critical weight and size of the amplifier apparatus, as well as maximize the total power to weight ratio.

A test of a rotary frequency amplifier of the present design was conducted utilizing a large motor stator connected to the output side of the amplifier as a dummy load for purposes of measuring the power output of the am-

0135732

plifier. Upon application of power to the amplifier, the input power was brought up to a minimum voltage of 60 volts AC at 6.25 amperes and 60 cycles per second frequency. As measured on the output side, the amplifier produced a reading of 7.5 amperes at 2 volts AC. This reading was acceptable since interest was in producing greater amperage with little concern for voltage.

On a third test, input power was as 150 volts AC, 13 amps at 60 cycles per second. Due to the small diameter of the test wire being used, No. 21 gauge, and the large current being carried by it, the results began to show phase shorting with output readings of between 18 and 19 amperes.

While this invention has been illustrated and described with respect to an embodiment shown in the drawings, it should be understood that the scope of the invention includes those embodiments and substantial equivalents recognized as coming within the scope of the invention and is limited only by the appended claims.

## CLAIMS

1.    Rotary frequency amplifier apparatus for increasing frequency amplification, characterised by the combination of
   - housing means (1);
   - a primary stator (4) and rotor (8) means in said housing (1) with means connected to said stator (4) for receiving input power from an external source and increasing the frequency of the input power,
   - a secondary rotary stator and rotor (16) means connected to and journaled concentrically within said primary stator (4) and rotor (8) means for receiving and increasing power received from said primary stator (4) and rotor (8) means, and
   - power transfer means for transferring power from said secondary rotor (16) means.

2.    Rotary frequency amplifier apparatus as set forth in Claim 1, characterised in that said power transfer means comprises means for recycling power to said primary stator (4) means for minimizing total power consumed.

3.    Rotary frequency amplifier apparatus as set forth in Claim 1 or 2, characterised in that in includes a pulse circuit means connected to said primary rotor (8) menas for developing a greater load to drive said primary rotor (8) means.

4.    Rotary frequency amplifier apparatus as set forth in Claim 1, 2 or 3, characterised in that said pulse circuit means can be set to transfer current to said secondary stator means.

5.    Rotary frequency amplifier apparatus as set forth in one of the preceding claims, characterised in that it includes cooling fan (32) means connected to either end of said housing (1).

6.    Rotary frequency amplifier apparatus as set forth in one of the proceding claims, characterised in that it includes cooling coils (33) surrounding said primary stator (4) means with said housing (1).

7.    Rotary frequency amplifier apparatus as set forth in one of the preceding claims, characterised in that it includes primary rotor support means supporting said primary rotor (8) means.

8.    Rotary frequency amplifier apparatus as set forth in one of the preceding claims, characterised in that it includes rotary gear means attached to said primary rotor support means for controlling the velocity of rotation.

9.    Rotary frequency amplifier apparatus as set forth in one of the preceding claims, characterised in that it includes gear lubricating means for lubricating said rotary gear means.

FIG. 1

FIG.2

FIG. 3

FIG.5

FIG. 4